# EUROPÄISCHE PATENTSCHRIFT

(11) **EP 1 009 595 B1**
(45) Veröffentlichungstag und Bekanntmachung des Hinweises auf die Patenterteilung: **04.09.2002**
(21) Anmeldenummer: 98933466.9
(22) Anmeldetag: 06.05.1998
(51) Int. Cl.: B25B 23/00

(54) **MIT DER ANTRIEBSWELLE EINER DREHMASCHINE KUPPELBARES WERKZEUGSYSTEM**
TOOL SYSTEM THAT CAN BE COUPLED TO A LATHE DRIVE SHAFT
SYSTEME D'OUTIL ACCOUPLABLE A L'ARBRE D'ENTRAINEMENT D'UN TOUR

(30) Priorität: 10.05.1997 DE 29708384 U
(43) Veröffentlichungstag der Anmeldung: 21.06.2000
(73) Patentinhaber: Zierpka, Eva-Maria, 76199 Karlsruhe (DE)
(72) Erfinder: Zierpka, Eva-Maria, 76199 Karlsruhe (DE)
(74) Vertreter: Geitz, Heinrich, Dr.-Ing.
(86) Internationale Anmeldenummer: DE9801265
(87) Internationale Veröffentlichungsnummer: WO98051450

(56) Entgegenhaltungen:
- WO-A-94/15755
- PATENT ABSTRACTS OF JAPAN vol. 017, no. 240 (M-1409), 14.Mai 1993 -& JP 04 365563 A (YOKOTA KOUGIYOU KK), 17.Dezember 1992,

## Beschreibung

Die Erfindung betrifft ein mit der Antriebswelle einer Drehmaschine verbundenes Werkzeugsystem. Das Werkzeugsystem besitzt ein in koaxialer Anordnung zur Antriebswelle der Drehmaschine angeordnete Werkzeugaufnahme, die in der Art eines Schnellspannfutters ausgebildet ist. Die Werkzeugaufnahme ist mit einer Mehrkantausnehmung zur Aufnahme eines Werkzeugs versehen, die sich ihrerseits in einen Aufnahmezylinder der Werkzeugaufnahme erstreckt. Der Aufnahmezylinder weist zur Verrastung des Werkzeugs eine Radialausnehmung auf, durch die ein Verrastungselement durch die Radialausnehmung hindurch mit einer Rastausnehmung eines eingeschobenen Werkzeugschaftes zum Zwecke der Verrastung in Eingriff bringbar ist. Der Aufnahmezylinder wird abschnittsweise von einer axialverschieblichen Verriegelungshülse umschlossen, mittels welcher das Verrastungselement zwischen einer Verrastungslage und einer die Verriegelung des Werkzeuges freigebenden Entriegelunglage beweglich ist.

Ein derartiges Werkzeugsystem ist aus der JP-A-4365563 vorbekannt.

Es handelt sich dabei im wesentlichen um einen sogenannten "Bithalter". Das eigentliche Werkzeug dieses System sind Bits unterschiedlicher Größe, wobei jedes einzelne Werkzeug an jeder Stirnseite jeweils einen Bitabschnitt als Funktionsabschnitt aufweist. Das Werkzeug wird dadurch an die Antriebsmaschine gekuppelt, das jeweils eine der beiden Bitspitzen in einer entsprechenden Aufnahmevorrichtung eingespannt wird. Dies hat den Nachteil, daß der Bit selbst zur Zentrierung der Werkzeugs eingesetzt wird, wobei die Kupplung je nach Bitgröße mehr oder minder kraftschlüssig ist. Dies hat den Nachteil, daß die Funktionsabschnitte im Gebrauch relativ schnell je nach Qualität der Kupplung mehr oder minder schnell verschleißen.

Zusätzlich ist beim Gegenstand der JP -A-4365563 eine Verrastung vorgesehen, die jedoch nur einseitig wirkt und daher nur zu einer unbefriedigenden Zentrierung des Werkzeugs beiträgt. Dies fördert abermals den Verschleiß des jeweils eingespannten Funktionsabschnitts.

Aus der EP-0 685 300 A1 ist bereits ein mit der Antriebswelle einer Handbohrmaschine oder einer Schraubendrehmaschine kuppelbares Werkzeugsystem vorbekannt, das eine Werkzeugaufnahme und ein Kombinationswerkzeug umfaßt.

Das Kombinationswerkzeug besitzt einen Schaft mit Sechskantprofil und zwei sich aufeinander gegenüberliegenden Seiten von diesem koaxial zueinander forterstreckende Funktionsabschnitte.

Bei bestimmungsgemäßer Verwendung ist das Kombinationswerkzeug in einer dem Sechskantprofil des Werkzeugschaftes angepaßten Sechskantausnehmung eines hülsenförmigen Adapters, der mit der Antriebswelle einer Drehmaschine verbindbar ist, aufgenommen und mittels einer Rastvorrichtung axial festgelegt. Der Adapter ist mit der Antriebswelle einer Drehmaschine verbindbar. Als Rastvorrichtung dient eine in einer den Zylindermantel des Adapters durchbrechenden Radialausnehmung aufgenommene Verrastungskugel. In einer Verriegelungslage steht die Verrastungskugel mit einer Kalotte in die Ausnehmung des Adapters vor und greift in eine umlaufende Radialnut im Schaft eines in dem Adapter aufgenommenen Werkzeugs ein. Gehalten wird die Verrastungskugel in der Verriegelungslage von einer auf dem Adapter axial beweglich aufgenommenen Verriegelungshülse, die infolge Axialverschiebung in eine die Verrastungskugel zum radialen Ausweichen freigebende Stellung bewegbar ist.

Nachteilig bei diesem vorbekannten Werkzeugsystem ist, daß die der axialen Festlegung dienende Rastkugel die bei bestimmungsgemäßem Gebrauch des Kombinationswerkzeugs auftretenden axialen Kräfte aufnehmen muß. Bei häufigem Gebrauch des Kombinationswerkzeugs führt dies zu raschem Verschleiß der Rastkugel. Ebenfalls unbefriedigend ist die mangelnde Zentrierung des Werkzeugs im Adapter.

Aus der DE 28 22 372 A 1 ist ebenfalls ein Werkzeugsystem bekannt, das eine Werkzeugaufnahme und ein Kombinationswerkzeug umfaßt. Das in dieser Schrift beschriebene Kombinationswerkzeug umfaßt einen Schaft mit Sechskant-Profil an dem zwei sich koaxial zueinander forterstreckende Funktionsabschnitte angeordnet sind. Bei bestimmungsgemäßer Verwendung ist auch dieses Kombinationswerkzeug in einer dem Sechskant-Profil des Werkzeugschafts angepaßten Sechskant-Ausnehmung eines Adapters aufgenommen. In axialer Hinsicht stützt sich das Kombinationswerkzeug mit einem konischen Übergangsabschnitt zwischen Werkzeugschaft und Funktionsabschnitt von einer ebenfalls konisch zugeformten Ringschulter des Adapters ab. Um das Kombinationswerkzeug gegen Herausfallen zu schützen, ist in einer Radialausnehmung des Adapters eine gegen die Wirkung von Federkräften begrenzt radialbewegliche Verrastungskugel aufgenommen, die bei bestimmungsgemäßem Gebrauch mit einer im Bereich des Funktionsabschnitts des Kombinationswerkzeugs angeordneten Ringnut zusammenwirkt . Bei diesem Gegenstand werden somit die beim Gebrauch des Kombinationswerkzeugs auftretenden axialen Kräfte von der Ringschulter des Adapters und nicht wie beim Gegenstand der EP-0 685 300 A1, von der Verrastungskugel aufgenommen. Jedoch ist auch bei diesem Gegenstand die Zentrierung des Kombinationswerkzeugs im Adapter unbefriedigend.

Ein wiederum anderes, aus einer Werkzeugaufnahme und einem darin lösbar aufnehmbaren Werkzeug bestehendes Werkzeugsystem wird in der US-5,013,194 beschrieben. Die Werkzeugaufnahme umfaßt einen mit einer Sechskant-Ausnehmung versehenen hülsenförmigen Adapter, der mit der Antriebswelle einer Drehmaschine verbindbar ist. In die Sechskant-Ausnehmung ist ein mit einem Schaft mit Sechskant-Profil sowie einem sich koaxial von diesem forterstreckenden Funktionsabschnitt versehenes Werkzeug einschiebbar. Zur axialen Festlegung des Werkzeugs in der Werkzeugaufnahme ist im Werkzeugschaft eine Ringnut vorgesehen und in die Wandung des Adapters sind in gleichen Winkelabständen mehrere Verrastungskugeln angeordnet, die in einer Verrastungslaqe mit einer Kalotte in die Ausnehmung des Adapters vorstehen und in die Ringnut des Werkzeugschaftes eingreifen. Zugleich stützt sich das Werkzeug an der der Drehmaschine zugewandten Stirnfläche der Sechskant-Ausnehmung unmittelbar vom Adapter ab. Gleich dem Gegenstand der EP-0 685 300 A 1 wird auch hier die Verrastungskugel in der Verriegelungslage von einer auf dem Adapter axial beweglich aufgenommenen Verriegelungshülse gehalten, die durch Axialverschiebung in eine die Verrastungskugel zum radialen Ausweichen freigebende Stellung bewegbar ist.

Auch bei diesem vorbekannten Gegenstand ist die Zentrierung des Werkzeuges in der Werkzeugaufnahme unbefriedigend. Zudem erlaubt die Ausgestaltung der Werkzeugaufnahme nicht den Einsatz eines Kombinationswerkzeugs.

Demgemäß soll durch die Erfindung ein verbessertes Werkzeugsystem mit einer Werkzeugaufnahme und einem in dieser aufnehmbaren Werkzeug geschaffen werden, bei dem die Nachteile der vorbekannten Werkzeugsysteme vermieden werden, und bei dem insbesondere die Zentrierung des Werkzeugs verbessert ist.

Gelöst ist diese Aufgabe durch ein Werkzeugsystem mit den Merkmalen des Patentanspruchs 1.

Im Unterschied zum Stande der Technik handelt es sich bei dem erfindungsgemäßen Werkzeugsystem darum, daß sich der in der Mehrkantausnehmung des Aufnahmezylinders aufgenommene Schaft des Werkzeuges an einem Zentrierbereich abstützt und dadurch einerseits zentriert wird und andererseits beim Gebrauch des Werkzeugs auftretende Axialkräfte aufgenommen werden. Die in die Rastausnehmung des Werkzeugschaftes eingreifenden, gleichmäßig verteilt über den Umfang angeordneten Verrastungselemente sorgen im Zusammenwirken mit dem Zentrierbereich der Mehrkant-Ausnehmung für eine im Vergleich zum Stande der Technik wesentlich verbesserte Zentrierung des Werkzeugs in der Werkzeugaufnahme. Die an den Verrastungselementen auftretenden Axialkräfte sind bei bestimmungsgemäßer Verwendung des Werkzeugs gering, da sie lediglich solche Axialkräfte aufzunehmen haben, die beim Zurückziehen des Werkzeugs aus seiner Arbeitsstellung auftreten.

Bei dem Zentrierbereich der Werkzeugaufnahme kann es sich vorzugsweise um eine konische Stützschulter handeln,die an dem zur Antriebswelle der Drehmaschine hinweisenden Ende der Mehrkantausnehmung des Aufnahmezylinders koaxial zu dieser angeordnet ist, wobei der Schaft des Werkzeugs an seinem vom Funktionsabschnitt abgewandten Ende einen der konischen Stützschulter entsprechenden Zentrierkonus aufweist. Durch das Zusammenwirken der Stützschulter und des Zentrierkonus wird eine im Vergleich zum Stande der Technik deutlich verbesserte Zentrierung des Werkzeugs bei dessen bestimmungsgemäßem Gebrauch erreicht.

Gemäß einer anderen sinnvollen Ausgestaltung der Erfindung ist die Verriegelungshülse als axialbewegbar auf dem Aufnahmezylinder der Werkzeugaufnahme bewegbare Schiebehülse ausgebildet und besteht aus einem der Arretierung der Verrastungselemente in der Verrastungslage dienenden Verriegelungsabschnitt und einem mit diesem Verriegelungsabschnitt verbundenen Halteabschnitt, der mit Mitteln zum Positionieren der Verriegelungshülse in der Verriegelungs- und Entriegelungsstellung versehen ist. Diese zweiteilige Ausbildung der Schiebehülse ist insbesondere fertigungstechnisch vorteilhaft.

Im Falle der Verwendung kugelförmiger Verrastungselemente hat sich als zweckmäßig erwiesen, wenn der Verriegelungsabschnitt der Verriegelungshülse eine Stützfläche besitzt, die der Kontur der Verrastungskugeln angepaßt ist und an der sich die Verrastungskugeln in der Verrastungslage flächenhaft abstützen. Dadurch sind infolge des Auftretens von Axialkräften beim Zurückziehen des Werkzeugs aus seiner Gebrauchslage geringe Flächenpressungen zwischen den Verrastungskugeln und der genannten Stützfläche des Verriegelungsabschnitts der Verriegelungshülse gewährleistet.

Als Mittel zur arretierenden Positionierung der Verriegelungshülse kann deren Halteabschnitt zweckmäßigerweise mit einem Rastelement und der Zylindermantel des Aufnahmezylinders mit wenigstens einer Rastausnehmung versehen sein, in die das Rastelement in Abhängigkeit von der jeweiligen Stellung der Verriegelungshülse lösbar eingreift.

Anstelle nur einer Rastausnehmung kann naturgemäß der die Verriegelungshülse aufnehmene Zylindermantel des Aufnahmezylinders auch mit zwei Rastausnehmungen zum wählbaren Positionieren der Verriegelungshülse ausgerüstet sein, die axial derart beabstandet voneinander angeordnet sind, daß beim Zusammenwirken des Rastelements der Verriegelungshülse mit der einen Rastausnehmung die Verrastungselemente in ihrer Verrastungslage arretiert sind und beim Zusammenwirken des Rastelements mit der anderen Rastausnehmung die Verrastungselemente zum radialen Ausweichen freigegeben sind.

Der Verriegelungsabschnitt und der Halteabschnitt der Verriegelungshülse können grundsätzlich in beliebiger Weise miteinander verbunden sein. Als besonders einfach und kostengünstig hat sich jedoch eine kraftschlüssige Verbindung, etwa in Form einer Clipverbindung, erwiesen. In diesem Falle solte zumindest der Verriegelungsabschnitt der Verriegelungshülse aus einem Material großer Härte bestehen, etwa aus Stahl, während sich die Ausbildung des Verriegelungsabschnittes aus einem eine gewisse Federelastizität aufweisenden Kunststoff als zweckmäßig erwiesen hat.

Erfindungsgemäß kann die Werkzeugaufnahme in hier im einzelnen nicht interessierender Weise mit der Antriebswelle einer Drehmaschine fest oder lösbar verbunden sein. Als zweckmäßig hat sich jedoch eine lösbare Verbindung erwiesen, etwa mittels eines sich koaxial von dem Aufnahmezylinder forterstreckenden, in einem an der Antriebswelle der Drehmaschine angeordneten Spannfutters aufgenommenen Spannzapfens.

Erfindungsgemäß kann auch ein auf die Werkzeugaufnahme aufsetzbarer Tiefenanschlag vorgesehen sein, der mit einem hinteren Abschnitt auf dem Aufnahmezylinder der Werkzeugaufnahme koaxial zu diesem aufnehmbar ist und einen vorderen Abschnitt aufweist, der am hinteren Abschnitt drehbar gelagert ist.

Bei Verwendung eines derartigen Tiefenanschlags ist einerseits eine präzise Tiefeneinstellung für das jeweilige Werkzeug gegeben, andererseits aber auch sichergestellt, daß beim Erreichen der vorgegebenen Tiefe der vordere Abschnitt auf das Werkstück aufsetzt und angesichts seiner drehbaren Lagerung am hinteren Abschnitt an dessen Rotation nicht teilnimmt, so daß am Werkstück keine Riefenausbildungen auftreten können.

Bei einem derartigen Tiefenanschlag hat sich auch als vorteilhaft erwiesen, wenn der vordere Abschnitt mit dem hinteren Abschnitt lösbar verbunden ist, etwa durch eine Clipverbindung. Dadurch können wahlweise vordere Abschnitte unterschiedlicher Längenerstreckung leicht mit dem hinteren Abschnitt des Tiefenanschlags gekuppelt und dadurch in einfachster Weise unterschiedliche Tiefen für das jeweils einzusetzende Werkzeug eingestellt werden.

Der Tiefenanschlag selbst kann mittels eines in eine entsprechende Rastausnehmung des Aufnahmezylinders der Werkzeugaufnahme eingreifenden Rastmittels lösbar mit dem Aufnahmezylinder verbindbar sein, so daß ein einfaches und schnelles Montieren und Demontieren des Tiefenanschlags gewährleistet ist. Der Tiefenanschlag kann aber auch mittels eines zwischen dem vorderen und dem hinteren Abschnitt angeordneten Gewindeabschnittes längenverstellbar ausgebildet sein, um so eine Anpassung an die jeweils geforderte Arbeitstiefe eines Werkzeugs zu ermöglichen.

Anstelle eines Werkzeugs mit einem sich an einem Ende von dem Werkzeugschaft koaxial forterstreckenden Funktionsabschnitt kann im Rahmen der Erfindung als Werkzeug auch ein Kombinationswerkzeug vorgesehen sein, bei dem an beiden Enden des Werkzeugschaftes sich koaxial zu diesem forterstreckende Funktionsabschnitte angeordnet sind.

Ein derartiges Kombinationswerkzeug weist zweckmäßigerweise entlang seiner Längsachse zwei jeweils aus einem Schaftabschnitt mit einem der Mehrkantausnehmung des Aufnahmezylinders angepaßten Mehrkantprofil und einem Funktionsabschnitt bestehende Teilwerkzeuge auf, deren Schaftabschnitte miteinander verbunden sind.

Zu diesem Zwecke sind, gemäß einer sinnvollen Weiterbildung, die einander zugewandten Enden der Schaftabschnitte des Werkzeugs mit Verbindungsabschnitten versehen, die Hinterschneidungen zum formschlüssigen Eingreifen von Kupplungsmitteln aufweisen. Als Kupplungsmittel kann zweckmäßigerweise ein Verbindungsteil mit axial einander gegenüberliegenden Kupplungsausnehmungen zum formschlüssigen Eingreifen in die Hinterschneidungen an den Enden der Schaftabschnitte vorgesehen sein.

Eine ebenfalls sinnvolle Weiterbildung sieht vor, daß die Verbindungsabschnitte der Teilwerkzeuge zur axialen Kraftaufnahme mit ihren einander zugewandten Stirnenden aneinander anliegen und daß als Verbindungsteil ein mit Rundwülsten zum Eingreifen in die Hinterschneidungen versehener Kupplungsring vorgesehen ist, der aus einem festen, jedoch begrenzt elastischen Material, etwa einem Kunststoff besteht.

Eine abermalige Weiterbildung des Kombinationswerkzeugs sieht im Interesse einer drehfesten Verbindung der Teilwerkzeuge vor, daß die Hinterschneidungen der Verbindungsabschnitte nicht radial symmetrisch aufgebaut sind und mit einem entsprechend ausgebildeten Verbindungsteil formschlüssig derart zusammenwirken, daß die Schaftabschnitte der Teilwerkzeuge drehfest miteinander verbunden und mit den Kanten ihrer Mehrkantprofile zueinander fluchtend festgelegt sind. Die Hinterschneidungen können dabei einen kreissegmentförmigen Querschnitt aufweisen und das Verbindungsmittel ist dann mit entsprechenden kreissegmentförmig ausgebildeten Kupplungsausnehmungen versehen.

Erfindungsgemäß kann die Verbindung der Teilwerkzeuge auch in der Weise verwirklicht sein, daß die einander zugewandten Enden der Schaftabschnitte jeweils mit einer zentralen Bohrung versehen und in diesen Bohrungen ein Verbindungsstift aufgenommen sowie durch Halteschrauben festgelegt ist, die ihrerseits in quer zu den zentralen Bohrungen der Teilwerkzeuge verlaufenden Gewindebohrungen aufgenommen sind.

Eine nochmalige wichtige Weiterbildung des Werkzeugs sieht vor, daß der jeweilige Funktionsabschnitt, oder wenigstens eines der Teilwerkzeuge, lösbar mit dem Schaft bzw. dem Schaftabschnitt des Teilwerkzeugs verbunden ist. Zu diesem Zwecke kann der Funktionsabschnitt in einer Bohrung des Schaftes bzw. des Schaftabschnittes axial verschiebbar aufgenommen, jedoch mittels einer in in eine die Wandung des Schaftes bzw. des Schaftabschnitts radial durchbrechende Gewindebohrung eingeschraubten Halteschraube in einer vorbestimmten axialen Position fixierbar sein.

Erfindungsgemäß kann als Funktionsabschnitt auch ein Stufenbohrer mit zwei unterschiedlichen Bohrquerschnitten vorgesehen sein. Ein derartiger Stufenbohrer hat sich dann als vorteilhaft erwiesen, wenn beim Verbinden zweier Bauteile beispielsweise mittels einer Schraube es einer Durchgangsbohrung in dem einen Bauteil und einer mit dieser Durchgangsbohrung fluchtenden Vorbohrung zum Eindrehen einer Verbindungsschraube in dem anderen Bauteil bedarf.

Die Werkzeugausbildung kann aber auch so beschaffen sein, daß der Schaft des Werkzeugs bzw. der Schaftabschnitt des Teilwerkzeugs eine zentrale Mehrkantausnehmung, vorzugsweise eine 1/4" Sechskantausnehmung zur Aufnahme eines entsprechenden Funktionsbits, etwa eines Schraubendreherbits, aufweist. Ein derartiger Schraubendreherbit kann beispielsweise mittels eines in der Mehrkantausnehmung des Schaftes aufgenommenen Haltemagneten axialfest, aber lösbar gehalten sein.

Schließlich sieht eine abermalige Weiterbildung auch vor, daß ein Teilwerkzeug des Kombinationswerkzeugs an seinem vom anderen Teilwerkzeug abgewandten Schaftteilende mit einem Senkabschnitt und einem über diesen axial vorstehenden Bohrer als Funktionsabschnitt versehen ist. Bei einer derartigen Werkzeugausbildung gelingt in einfacher Weise im Anschluß an den Bohrvorgang ein Ansenken des Bohrloches, beispielsweise für die Aufnahme eines Schraubenkopfes. In diesem Fall handelt es sich bei dem Senkabschnitt um einen 90°-Senker.

Erfindungsgemäß kann der Senkabschnitt aber auch für das Anphasen von Bohrlöchern zum nachfolgenden Einbringen von Gewindebohrungen ausgelegt und das vom Senkabschnitt abgewandte Teilwerkzeug mit einem dem Bohrquerschnitt des Bohrers angepaßten Gewindebohrer ausgerüstet sein. Bei einer derartigen Werkzeuggestaltung gelingt das Einbringen des Bohrloches zum nachfolgenden Einschneiden eines Gewindes und das Anphasen des Bohrloches unmittelbar aufeinanderfolgend, das Einbringen einer Gewindebohrung hingegennach dem Umstecken des Werkzeuges in der Werkzeugaufnahme derart, daß der Gewindebohrer von der Werkzeugaufnahme vorsteht.

Bei einer abermals vorteilhaften Weiterbildung des erfindungsgemäßen Werkzeugsystems ist im Aufnahmezylinder der Werkzeugaufnahme, zwischen den für die Aufnahme der Verrastungselemente vorgesehenen Radialausnehmungen und dem Zentrierbereich der Mehrkantausnehmung, eine Torsionsund/oder eine Biegezone vorgesehen.

Um die Sicherheit beim Betrieb des erfindungsgemäßen Werkzeugsystems zu verbessern, ist der Aufnahmezylinder an der Werkzeugaufnahme über eine Sicherheitskupplung, vorzugsweise eine Rutschkupplung, gesichert.

Anhand der beigefügten Zeichnungen sollen nachstehend ein Ausführungsbeispiel einer Werkzeugaufnahme und eines Tiefenanschlages sowie mehrere erfindungsgemäße Werkzeugausbildungen näher erläutert werden. In schematischen Ansichten zeigen:
- Fig. 1: eine hülsenförmige Werkzeugaufnahme mit einer auf dieser aufgenommenen Verriegelungshülse in einer Längsschnittansicht,
- Fig. 2: die Werkzeugaufnahme in einem Querschnitt gemäß der Schnittlinie II-II in Fig. 1.
- Fig. 3: einen Querschnitt durch die Werkzeugaufnahme gemäß der Schnittlinie III-III in Fig. 1,
- Fig. 4: ebenfalls einen Querschnitt durch die Werkzeugaufnahme gemäß der Schnittlinie IV-IV in Fig. 1,
- Fig. 5: in einem vergrößerten Ausschnitt aus Fig. 1 Details der axialverschiebbar auf einem Aufnahmezylinder der Werkzeugaufnahme geführten Verriegelungshülse zum wahlweisen Arretieren oder Freigeben von Verrastungskugeln,
- Fig. 6: einen mit der Werkzeugaufnahme kuppelbaren Tiefenanschlag teils in einer Seitenansicht und teils in einer Längsschnittansicht,
- Fig. 7: ein mit der Werkzeugaufnahme kuppelbares Bohrwerkzeug,
- Fig. 8: ein teilweise geschnitten dargestelltes, aus zwei miteinander verbundenen Teilwerkzeugen bestehendes Kombinationswerkzeug,
- Fig. 9: eine hälftig geschnitten dargestellte verdrehfeste Verbindung zweier Teilwerkzeuge als Kombinationswerkzeug,
- Fig. 10: die verdrehfeste Verbindung zweier Teilwerkzeuge in einem der Schnittlinie X-X in Fig. 9 entsprechenden Querschnitt,
- Fig. 11: in einer Ansicht wie in Fig. 8 ein anderes Kombinationswerkzeug mit stirnendig aneinanderstoßenden Teilwerkzeugen,
- Fig. 12, 13: weitere Kombinationswerkzeuge in Ansichten wie in Fig. 11,
- Fig. 14: in einer ausschnittsweisen Schnittansicht eine Werkzeugaufnahme, deren mit einer Mehrkantausnehmung zum Aufnehmen eines Werkzeugs versehener Aufnahmezylinder mit einer Torsionszone ausgerüstet ist,
- Fig. 15: in einer Ansicht wie in Fig. 14 eine Werkzeugaufnahme, deren Aufnahmezylinder eine Torsions-/Biegezone aufweist und
- Fig. 16: ebenfalls in einer Ansicht wie in Fig. 14 eine Werkzeugaufnahme, deren mit einer Mehrkantausnehmung zur Befestigung eines Werkzeugs versehener Aufnahmezylinder über eine Rutschkupplung gesichert ist.

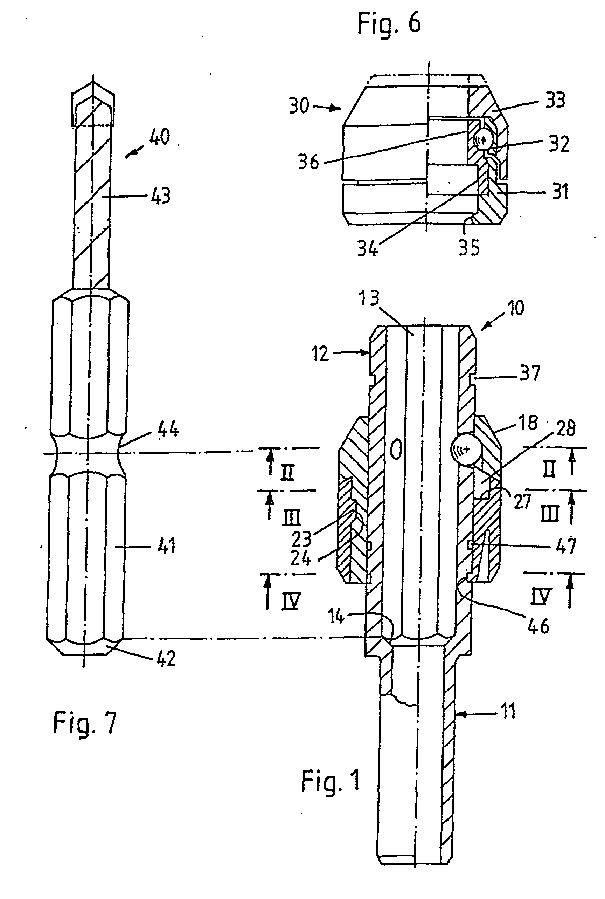

Bei der in Fig. 1 veranschaulichten Werkzeugaufnahme 10 handelt es sich um einen hülsenförmigen Adapter mit einem Spannzapfen 11, der in einem Spannfutter etwa einer - nicht dargestellten - Handbohrmaschine drehfest aufnehmbar und dadurch mit deren Antriebswelle kuppelbar ist, und mit einem koaxial zum Spannzapfen 11 angeordneten Aufnahmezylinder 12. Von der vom Spannzapfen 11 abgewandten Seite des Aufnahmezylinders 12 erstreckt sich in diesen eine Sechskantausnehmung 13 hinein, die zum Spannzapfen 11 hin, der rohrförmig ausgebildet ist und kleineren Durchmesser als der Aufnahmezylinder 12 aufweist, in einer konischen Stützschulter 14 endet.

Der Mantel des Aufnahmezylinders 12 ist beabstandet von der Stützschulter 14 von drei Radialausnehmungen 15 durchbrochen, die gleichmäßig über den Umfang des Aufnahmezylinders verteilt sind und in denen je eine Verrastungskugel 16 aufgenommen ist. Die Radialausnehmungen 15 verjüngen sich von außen nach innen derartig, daß die Verrastungskugeln 16 in den Radialausnehmungen 15 gehalten sind, jedoch in ihren Endlagen mit Kugelkalotten in die Sechskantausnehmung vorstehen.

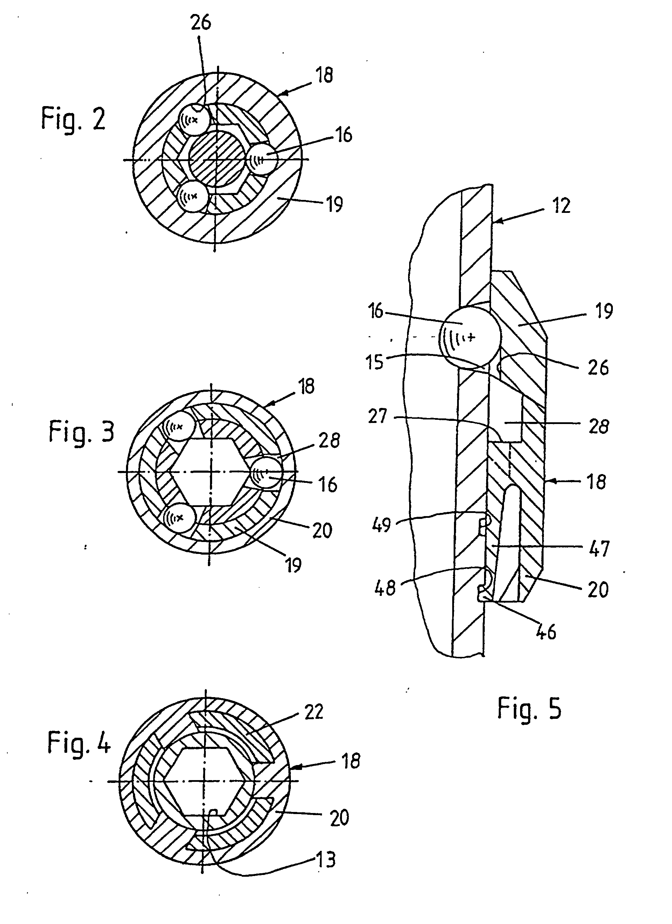

Auf dem Aufnahmezylinder 12 der Werkzeugaufnahme 10 ist eine Verriegelungshülse 18 axialverschiebbar geführt, die in einer Verriegelungsstellung die Verrastungskugeln 16 in ihren in die Sechskantausnehmung 13 vorstehenden Verriegelungslagen arretiert, wie Fig. 2 zeigt, und in einer Entriegelungsstellung zum radialen Ausweichen freigibt, wie Fig. 3 zeigt. Die Verriegelungshülse 18 besteht aus einem ringförmigen Verriegelungsabschnitt 19 und einem damit formschlüssig fest verbundenen Halteabschnitt 20. Bei dem Halteabschnitt 20 handelt es sich um ein begrenzt elastisches Kunststoff-Spritzgießteil. Der Verriegelungsabschnitt 19 kann als metallisches Drehteil ausgebildet sein, alternativ hierzu ist jedoch auch möglich, den Verriegelungsabschnitt 19 aus Kunststoff auszuführen, um das elastische Verhalten dieses Werkstoffes für eine möglichst spielfreie Werkzeugzentrierung auszunutzen. Nach dem hier im einzelnen nicht interessierenden Einführen der Verrastungskugeln 16 in die Radialausnehmungen 15 ist der Halteabschnitt 20 von der dem Spannzapfen 11 zugewandten Seite her auf den Verriegelungsabschnitt 19 aufgeschoben und übergreift von diesem axial vorstehende Zylindersegmente 22.

In diese Zylindersegmente erstreckt sich eine Ringnut 23, in die ein angepaßter Ringbund 24, der innenseitig radial vom Halteabschnitt 20 vorsteht, formschlüssig eingreift und nach dem Aufschieben des Halteabschnittes 20 auf die in Richtung zum Spannzapfen 11 vorstehenden Zylindersegmente 22 des Verriegelungsabschnittes 19 eingeschnappt ist.

Im Bereich der in den Radialausnehmungen 15 aufgenommenen Verrastungskugeln 16 sind innenseitig in den Verriegelungsabschnitt 19 der Verriegelungshülse 18 Längsnuten 26 eingestochen, die einen Querschnitt mit einem Radius gleich dem Radius der Verrastungskugeln 16 aufweisen und auf der vom Halteabschnitt 20 abgewandten Seite in ebensolchen Krümmungen enden, was Fig. 5 zeigt. In der in Fig. 1 gezeigten Verriegelungsstellung der Verriegelungshülse 18 befinden sich die Verrastungskugeln 16 in ihren in die Sechskantausnehmung 13 des Aufnahmezylinders 12 vorstehenden Verrastungslagen und stützen sich außenseitig an den Längsnuten 26 flächenhaft ab. Fluchtend mit den Längsnuten 26 erstrecken sich in der Verriegelungshülse 18 von einer Schulter 27 axialbegrenzte Ausnehmungen 28 als Freiräume für die Aufnahme der Verrastungskugeln 16 in deren Entriegelungslagen fort.

Mit der Werkzeugaufnahme 10 ist wahlweise ein Tiefenanschlag 30 kuppelbar. Der Tiefenanschlag besteht aus einem auf dem vom Spannzapfen 11 abgewandten Ende des Aufnahmezylinders 12 aufnehmbaren hinteren Abschnitt 31, mit dem über ein Kugellager 32 ein vorderer Abschnitt 33 drehbar verbunden ist. Den hinteren Abschnitt 31 des Tiefenanschlags 30 bildet ein Kunststoffring mit einer dem Außendurchmesser des Aufnahmezylinders 12 angepaßten zentralen Ausnehmung 34, in die ein Ringwulst 35 an dem vom Kugellager 32 abgewandten Ende vorsteht. Aufgenommen in dem von dem Kunststoffring gebildeten hinteren Abschnitt 31 ist ein Innenring 36 des Kugellagers 32, der radial in die zentrale Ausnehmung 34 vorsteht und dadurch eine axiale Begrenzung der dem Aufnahmezylinder 12 angepaßten zentralen Ausnehmung 34 bildet. Bei dem vorderen Abschnitt 33 des Tiefenanschlags 30 handelt es sich ebenfalls um ein Kunststoff-Spritzgießteil, das einen Außenring des Kugellagers umgreift und unter einer gewissen Federvorspannung auf diesem austauschbar aufgenommen ist. Dadurch gelingt die Ausrüstung des Tiefenanschlags 30 mit Vorderabschnitten unterschiedlicher Längenerstreckkung

Bei bestimmungsgemäßem Gebrauch ist der hintere Abschnitt 31 des Tiefenanschlags 30 auf dem vom Spannzapfen 11 abgewandten Ende des Aufnahmezylinders 12 aufgenommen, wobei der in die zentrale Ausnehmung 34 vorstehende Randwulst 35 in eine von außen in den Aufnahmezylinder 12 eingestochene Ringnut 37 eingreift.

Wenn in der Mehrkantausnehmung 13 des Aufnahmezylinders 12 ein Werkzeug aufgenommen und mittels der Verrastungskugeln 16 axialfest gehalten ist, steht der Funktionsabschnitt, etwa ein 8ohrer, nach der vom Spannzapfen 11 wegweisenden Seite vom Aufnahmezylinder 12 und dem auf diesem aufgenommenen Tiefenanschlag 30 vor. Wenn mit einem derartigen Bohrer eine Bohrung eingebracht wird, wobei angesichts der kraftschlüssigen Aufnahme des hinteren Abschnitts 31 des Tiefenanschlags 30 auf dem Aufnahmezylinder 12 der Tiefenanschlag mit umläuft, setzt nach dem Erreichen einer vorbestimmten Bohrtiefe der vordere Abschnitt 33 des Tiefenanschlags 30 mit seinem vom Kugellager 32 abgewandten Stirnende auf das Werkstück auf und nimmt angesichts seiner über das Kugellager 32 vermittelten drehbaren Verbindung mit dem hinteren Abschnitt 31 an einer etwaigen weiteren Drehung der Werkzeugaufnahme 10 und damit des Werkzeugs nicht teil. Dadurch werden Riefenbildungen auf dem Werkstück vermieden. Angesichts der Austauschbarkeit des vorderen Abschnittes 33 des Tiefenanschlags 30 gegen vordere Abschnitte anderer Längenerstreckung ist der Tiefenanschlag 30 zur Begrenzung unterschiedlicher Bohrtiefen verwendbar.

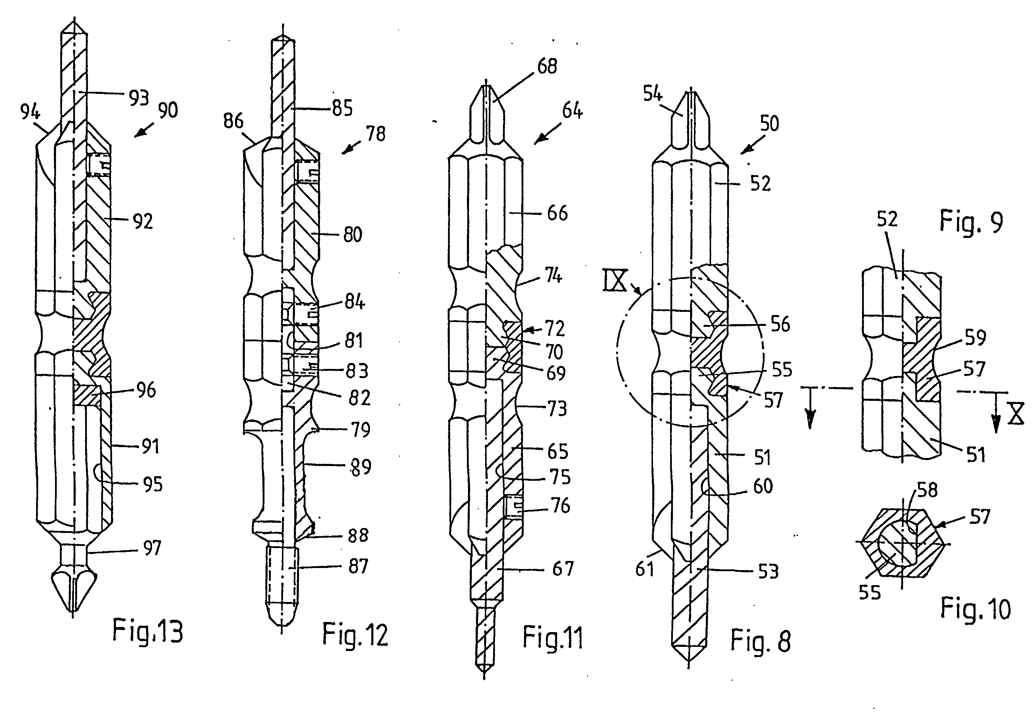

Mit der Werkzeugaufnahme 10 ist ein Werkzeug 40 der in Fig. 7 dargestellten Art drehfest kuppelbar. Das Werkzeug 40 besitzt einen Schaft 41 mit einem Sechskantprofil, das der sich in den Aufnahmezylinder 12 hineinerstreckenden Sechskantausnehmung 13 angepaßt ist. Den Schaft 41 schließt an einem Stirnende ein der konischen Stützschulter 14 der Aufnahmehülse 12 angepaßter Zentrierkonus 42 ab und vom anderen Ende des Werkzeugschaftes 41 erstreckt sich ein hier nicht weiter interessierender Bohrer 43 fort. Im Werkzeugschaft 41 ist in einem Abstand vom Zentrierkonus 32, der gleich dem axialen Abstand zwischen der die Sechskantausnehmung 13 des Aufnahmezylinders 12 begrenzenden Stützschulter 14 und den Verrastungskugeln 16 ist eine umlaufende Ringnut 44 als Rastausnehmung angeordnet, die der Kontur der Verrastungskugeln 16 angepaßt ist und in die in der Verriegelungsstellung der Verriegelungshülse 18 die Verrastungskugeln 16 formschlüssig eingreifen und sich dabei im Bereich der Längsnuten 26 im Verriegelungsabschnitt 19 der Verriegelungshülse 18 abstützen. In dieser Stellung ist die Verriegelungshülse durch ein Rastelement 46 arretiert, das an einem sich von dem Halteabschnitt 20 der Verriegelungshülse 18 zwischen den Zylindersegmenten des Verriegelungsabschnitts 19 forterstreckenden Federarm 47 angeordnet ist und in eine umlaufende Ringnut 48 des Aufnahmezylinders 12 formschlüssig eingreift.

Wenn die Verriegelungshülse 18 aus dieser Verriegelungsstellung nach der vom Spannzapfen 11 wegweisenden Seite in eine Entriegelungsstellung betätigt wird, greift das Rastelement 46 in eine entsprechend beabstandet von der ersten Ringnut 48 in den Aufnahmzylinder 12 eingestochene zweite Ringnut 49 ein. In dieser Position der Verriegelungshülse 18 stehen die axial zu den in den Verriegelungsabschnitt 19 eingestochenen Längsnuten 26 angeordneten Ausnehmungen 28 über den Radialausnehmungen 15 mit den in diesen aufgenommenen Verrastungskugeln 16, so daß letztere in die Ausnehmungen 28 derart ausweichen können, da keine Kugelkalotte mehr in die Sechskantausnehmung 13 des Aufnahmezylinders 12 vorstehen.

In dieser Entriegelungsstellung kann der Schaft eines entsprechenden Werkzeugs in die Sechskantausnehmung eingeführt und auch aus dieser entfernt werden.

In Fig. 8 ist demgegenüber ein Kombinationswerkzeug 50 dargestellt, das aus zwei stirnendig miteinander verbundenen Teilwerkzeugen mit je einem Schaftteil 51, 52, das ein der Sechskantausnehmung 13 des Aufnahmezylinders 12 angepaßtes Sechskantprofil aufweist, und einem vom jeweiligen Schaftteil vorstehenden Funktionsabschnitt 53, 54 besteht. An den einander zugewandten Enden der Schaftteile 51, 52 stehen von diesen pilzförmige Kupplungsabschnitte 55, 56 mit Hinter- schneidungen vor. Zwischen den Schaftteilen 51, 52 ist ein Verbindungsteil 57 aus begrenzt elastischem Material, etwa einem geeigneten Kunststoff, angeordnet, das in stirnendigen Kupplungsausnehmungen die Kupplungsabschnitte 55, 56 der Schaftteile 51, 52 aufnimmt und deren Hinterschneidungen hintergreift. Jeweils die vorstehenden Kupplungszapfen 55,56 der Schaftteile und die Kupplungsausnehmungen des Verbindungsteils sind mit einer Abflachung 58 versehen, die eine verdrehfeste Verbindung der beiden Schaftteile 51, 52 miteinander vermittelt. Im übrigen weist das Verbindungsteil in Übereinstimmung mit den Schaftteilen 51, 52 Sechskantprofil auf und in dem Verbindungsteil läuft eine Ringnut 59 als Verrastungsaufnehmung um, in die bei bestimmungsgemäßem Gebrauch des Kombinationswerkzeugs 50 die Verrastungskugeln 16 der Werkzeugaufnahme 10 eingreifen.

Bei dem Funktionsabschnitt des einen Teilwerkzeugs handelt es sich um einen Bohrer, der in einer Axialbohrung 60 des Schaftteils 51 verdrehfest aufgenommen ist. Auf der zu dem Bohrer hinweisenden Seite ist an das Schaftteil 51 unmittelbar ein Senkabschnitt 61 angeformt. Das andere Schaftteil 52 ist mit einem unmittelbar angeformten Kreuzschlitz-Schraubwerkzeug ausgerüstet.

Auch das in Fig. 11 veranschaulichte Kombinationswerkzeug 64 besteht aus zwei Teilwerkzeugen mit je einem Schaftteil 65,66 und einem von diesem vorstehenden Funktionsabschnitt 67,68. An den von den Funktionsabschnitten abgewandten Enden stehen wiederum von den Schaftteilen Kupplungsabschnitte 69, 70 mit Hinterschneidungen vor, aber die Kupplungsabschnitte der beiden Schaftteile 65,66 liegen, im Gegensatz zu der Ausführungsform gemäß Fig. 8, stirnendig aneinander an. Zusammengehalten werden die beiden Schaftteile mittels eines ringförmigen Verbindungsteils 72, das die Kupplungszapfen 69, 70 umschließt und deren Hinterschneidungen hintergreift.

Ebenfalls im Unterschied zu der Ausführungsform nach Fig. 8 sind jeweils beabstandet von dem Verbindungsteil die Schaftteile 65,66 mit umlaufenden Nuten 73,74 als bei bestimmungsgemäßer Verwendung mit den Verrastungskugeln 16 der Werk- zeugaufnahme 10 zusammenwirkende Rastausnehmungen ausgerüstet.

Bei dem Funktionsabschnitt 67 des einen Teilwerkzeugs handelt es sich um einen Stufenbohrer, der in einer Längsbohrung 75 des Schaftteils 65 längeneinstellbar aufgenommen und mittels einer Madenschraube 76 fixiert ist, die quer zu der Längsausbohrung 75 verlaufenden Gewindebohrung aufgenommen ist.

Bei dem in Fig. 12 veranschaulichten Funktionswerkzeug 78 erstreckt sich jeweils von den aneinander liegenden Stirnenden der Schaftteile 79,80 aus in diese eine zentrale Bohrung 81 hinein, in der ein die beiden Schaftteile 79,80 miteinander verbindender Zapfen 82 aufgenommen ist. Festgelegt auf dem Zapfen 82 sind die Schaftteile 79,80 mittels jeweils einer Madenschraube 83,84, die in einer quer zur Schaftängsachse verlaufenden Gewindebohrung aufgenommen ist.

Das eine Schaftteil 80 der Ausführungsform gemäß Fig. 12 ist mit einem in einer Axialbohrung einstellbar aufgenommenen und mittels einer in einer querverlaufenden Gewindebohrung aufgenommenen Madenschraube gesicherten Bohrer 85 bestückt und das Schaftteilende ist als 120°-Senkabschnitt 86 ausgebildet. Das andere Schaftteil ist mit einem Gewindebohrer 87 als Funktionsabschnitt ausgerüstet, dessen vom Bohrabschnitt entfernter Schaft in einer Längsbohrung des betreffenden Schaftteils 79 aufgenommen. Das Schaftteil 79 weist an seinem dem Gewindebohrer 87 zugewandten Ende eine Schulter 88 auf, mittels der sich das Werkzeug 78 im Einbauzustand auf der Stützschulter 14 der Werkzeugaufnahme 10 axial abstützen kann. Gleichzeitig dient diese Schulter 88 beim Herstellen von Gewindesacklöchern als Tiefenanschlag, um zu verhindern, dß der Gewindebohrer mit der Spitze aufsetzen kann. Desweiteren ist der Schaftabschnitt 79 mit einer Torsionszone 89 versehen.

Das in Fig. 13 veranschaulichte Kombinationswerkzeug 90 besitzt in gleicher Weise wie das oben in Verbindung mit Fig. 8 beschriebene Funktionswerkzeug verbundene Schaftteile 91, 92 und ein Schaftteil ist mit einem in einer Längsbohrung aufgenommenen und mittels einer Madenschraube gesicherten Bohrer 93 bestückt sowie an dem zum Bohrer hinweisenden Ende mit einem 90°-Senkabschnitt 94 ausgerüstet. Das andere Schaftteil 91 ist mit einer 1/4"-Sechskantausnehmung 95 versehen und in dieser ist der Schaft eines Schraubendreherbit verdrehfest aufgenommen. Am Boden der Sechskantausnehmung 94 ist ein Haltemagnet 96 angeordnet, mittels dessen das Schraubendreherbit 97 hinreichend axialfest gehalten wird.

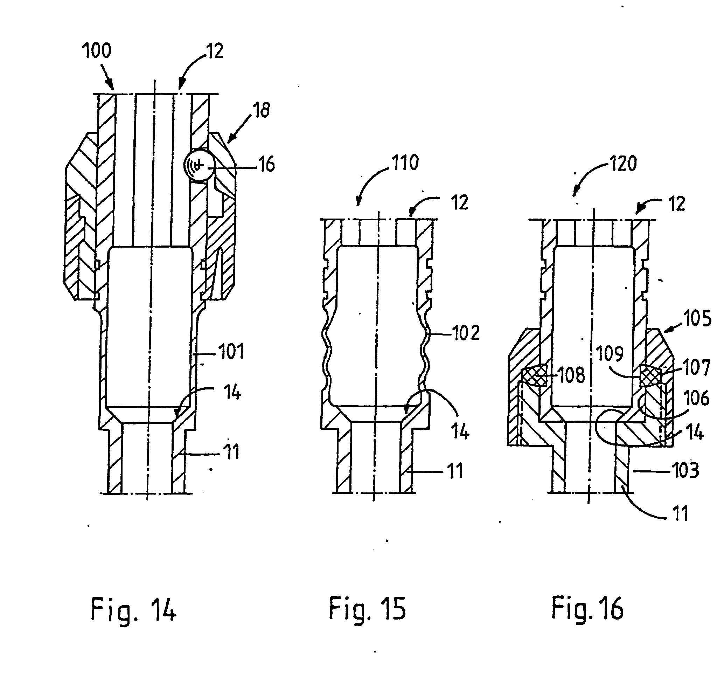

Die in Fig. 14 gezeigte Werkzeugaufnahme 100 unterscheidet sich von der Werkzeugaufnahme 10 dadurch, daß die Wandung des Aufnahmezylinders 12 in einen begrenzten Bereich zwischen der Stützschulter 14 und den Verrastungskugeln 16 stark verdünnt ist und somit eine Torsionszone 101 bildet. Anstelle einer Torsionszone 101 kann jedoch - wie in Fig. 15 gezeigt - auch eine Torsions-/ und Biegezone 102 im Aufnahmezylinder 12 zwischen der konischen Ringschulter 14 und den Verrastungselementen vorgesehen sein. Diese Torsions-/ und Biegezone kann entweder aus einem wellschlauchartig ausgebildeten Teil der Wandung des Aufnahmezylinders 12 bestehen oder ein entsprechender, aus einem elastischen Material gefertigter Abschnitt ist in diesem Teil des Aufnahmezylinders 12 angeordnet. Die Torsions-/Biegezone 102 ermöglicht in einem begrenzten Umfang auch die Betätigung des Werkzeugs um einen gegenüber der Drehachse der Antriebswelle einer Drehmaschine geneigten Winkel.

Um das erfindungsgemäße Werkzeugsystem durch Begrenzen des übertragbaren Drehmoments vor Überlastung zu schützen und Beschädigungen an Werkzeugen und Werkstücken zu vermeiden, ist bei der in Fig. 16 gezeigten Werkzeugaufnahme 120 vorgesehen, den Aufnahmezylinder 12 nicht - wie bei den vorangezeigten Werkzeugaufnahmen 10, 100, 110, einstückig mit dem dem Spannzapfen 11 zugewandten Abschnitt 103 der Werkzeugaufnahme auszubilden, sondern der Aufnahmezylinder 12 ist über eine Rutschkupplung 105 mit dem spannzapfenseitigen Abschnitt 103 verbunden.

Zu diesem Zweck weist der Abschnitt 103 der Werkzeugaufnahme 120 an seinem vom Spannzapfen 11 abgewandten Ende eine zylinderförmige, in ihrem Innendurchmesser dem Außendurchmesser des Aufnahmezylinders 12 angepaßte Ausnehmung 106 auf. In der Ausnehmung 106 ist eine Ringnut 107 angeordnet, die zur Aufnahme eines Reibringes 108 bestimmt ist. Von der Ringnut 107 steht der Reibring 108 innenseitig in die Ausnehmung 106 vor und greift in eine am Aufnahmezylinder 12 umlaufende Radialnut 109 an. Hierdurch wird nicht nur eine zuverlässige Reibschlußverbindung zwischen dem spannzapfenseitigen Abschnitt 103 der Werkzeugaufnahme 120 und dem Aufnahmezylinder 12 hergestellt, sondern zusätzlich der Aufnahmezylinder 12 an dem Abschnitt 103 axial festgelegt.

## Patentansprüche

1. Mit der Antriebswelle einer Drehmaschine, etwa einer Handbohrmaschine oder einer Schraubendrehmaschine, verbundenes Werkzeugsystem,
- mit einer in der Art eines Schnellspannfutters ausgebildeten, in koaxialer Anordnung zur Antriebswelle der Drehmaschine mit dieser kuppelbaren oder fest verbundenen Werkzeugaufnahme (10,100,110,120),
- mit einem in einer Mehrkantausnehmung (13), insbesondere einer Sechskantausnehmung, die sich von der von der Antriebswelle der Drehmaschine abgewandten Stirnseite aus in einen Aufnahmezylinder (12) der Werkzeugaufnahme (10,100, 110,120) hineinerstreckt, drehfest, aber entfernbar, aufgenommenen Werkzeug (40,50,64,71,90), das einen sich an einem Zentrierbereich (14) in der Mehrkantausnehmung (13) der Werkzeugaufnahme (10,100,110,120) axial abstützenden Schaft (41) besitzt, welcher Schaft (41) ein der Mehrkantausnehmung des Aufnahmezylinders angepaßtes Mehrkantprofil sowie wenigstens eine Rastausnehmung (44,59,73,74) aufweist und von welchem Schaft sich wenigstens ein Funktionsabschnitt koaxial forterstreckt,
- mit einer Verrastung der Werkzeugaufnahme (10,100, 110,120) mit dem Werkzeugschaft (41), die mittels einer Verriegelungshülse (18) mit der wenigstens einen Rastausnehmung (44) des Werkzeugschaftes (41) in einer Verrastungslage in Eingriff und in einer Entriegelungslage außer Eingriff setzbar ist,
- wobei das Werkzeug auf der in Einbaulage der Antriebswelle der Drehmaschine abgewandten Stirnseite einen Funktionsabschnitt und auf der in Einbaulage der Antriebswelle der Drehmaschine zugewandten Stirnseite einen Zentrierabschnitt (42) ausschließlich zum Zwecke der Zentrierung aufweist, der mit dem Zentrierbereich (14) der Werkzeugaufnahme (10, 100 , 110, 120) zusammenwirkt und
- wobei in der Einbaulage der Zentrierabschnitt (42) und der Zentrierbereich (14) in unmittelbarer Anlage sind,
- wobei die Verrastung (16) aus mehreren gleichartigen Verrastungselementen (16) aufgebaut ist, die jeweils in gleichen Winkelabständen voneinander, axialbeabstandet vom Zentrierbereich (14) in den Mantel des Aufnahmezylinders (12) durchbrechenden Radialausnehmungen (15) aufgenommen und zwischen einer in die Mehrkantausnehmung (13) vorstehenden Verrastungslage, zwecks Eingriff in die wenigstens eine Rastausnehmung (44) des Werkzeugschaftes (41), und einer Entriegelungslage zur Freigabe des Werkzeugschaftes (44) bewegbar sind, und an welchen Verriegelungselementen (16) sich das Werkzeug in radialer Hinsicht abstützt und
- mit der auf dem Aufnahmezylinder (12) aufgenommenen Verriegelungshülse (18), mittels welcher die Verrastungselemente (16) einerseits in der Verrastungslage arretierbar und andererseits zum radialen Ausweichen in die Entriegelungslage freigebbar sind.

2. Werkzeugsystem nach Anspruch 1, **dadurch gekennzeichnet, daß** es sich bei dem Zentrierbereich der Werkzeugaufnahme (10,100,110,120) um eine konische Stützschulter (14) handelt, die an dem zur Antriebswelle einweisenden Ende der Mehrkantausnehmung (13) des Aufnahmezylinders (12) koaxial zu dieser angeordnet ist, und daß der Schaft des Werkzeugs an seinem vom Funktionsabschnitt abgewandten Ende einen der konischen Stützschulter (14) entsprechenden Zentrierkonus (42) aufweist.

3. Werkzeugsystem nach einem Anspruch 1 **dadurch gekennzeichnet, daß** die Verriegelungshülse (18) als axialbewegbar auf dem Aufnahmezylinder (12) bewegbare Schiebehülse ausgebildet ist und aus einem der Arretierung der Verrastungselemente (16) inihrer Verrastungslage dienenenden Verriegelungsabschnitt (19) und einem mit diesem verbundenen Halteabschnitt (20) besteht, welcher Halteabschnitt (20) Mittel zum Positionieren der Verriegelungshülse (18) in der Verriegelungs- und Entriegelungsstellung aufweist.

4. Werkzeugsystem nach Anspruch 3, **dadurch gekennzeichnet, daß** als Verriegelungselemente Verriegelungskugeln vorgesehen sind und der Verriegelungsabschnitt (19) der Verriegelungshülse (18) eine der Kontur der Verrastungskugeln (16) angepaßte Stützfläche (26) besitzt, an der sich die Verrastungskugeln in der Verastungslage flächenhaft abstützen.

5. Werkzeugsystem nach Anspruch 3 oder 4, **dadurch gekennzeichnet, daß** der Halteabschnitt (20) der Verriegelungshülse (18) als Mittel zu deren arretierenden Positionierung in der Verriegelungs- und Entriegelungsstellung ein Rastelement (46) aufweist und daß im Zylindermantel des Aufnahmezylinders (12) wenigstens eine Aufnahmevorrichtung (48,49) angeordnet ist, in die das Rastelement (46)zur Positionierung der Verriegelungshülse (18) lösbar eingreift.

6. Werkzeugsystem nach Anspruch 5, **dadurch gekennzeichnet, daß** der Zylindermantel des Aufnahmezylinders (12) mit zwei Aufnahmevorrichtungen (48,49) zum wählbaren Positionieren der Verriegelungshülse (18) versehen ist, die axial derart beabstandet voneinander angeordnet sind, daß beim Zusammenwirken des Rastelements (46) mit der einen Aufnahmevorrichtung (48) die Verrastungselemente in ihrer Verrastungslage arretiert sind und beim Zusammenwirken des Rastelements (46) mit der anderen Aufnahmevorrichtung (49) die Verrastungselemente zum radialen Ausweichen in ihre Entriegelungslage freigegeben sind.

7. Werkzeugsystem nach einem der Ansprüche 3 bis 6, **dadurch gekennzeichnet, daß** der Verriegelungsabschnitt (19) und der Halteabschnitt (20) der Verriegelungshülse (18) kraftschlüssig, etwa durch eine Clipverbindung, miteinander verbunden sind.

8. Werkzeugsystem nach einem der Ansprüche 3 bis 7, **dadurch gekennzeichnet, daß** zumindest der Verriegelungsabschnitt (19) der Verriegelungshülse (18) aus einem Material großer Härte, etwa Stahl, besteht.

9. Werkzeugsystem nach einer der vorhergehenden Ansprüche, **dadurch gekennzeichnet, daß** die Werkzeugaufnahme (10,100, 110,120) lösbar, etwa mittels eines in einem an der Antriebswelle angeordneten Spannfutter aufgenommenen Spannzapfens (11), mit der Antriebswelle der Drehmaschine verbunden ist.

10. Werkzeugsystem nach einem der vorhergehenden Ansprüche, **gekennzeichnet durch** einen lösbar auf die Werkzeugaufnahme (10,100,110,120) aufsetzbaren Tiefenanschlag (30), der mit einem hinteren Abschnitt (31) auf dem Aufnahmezylinder (12) der Werkzeugaufnahme (10,100,110,120) koaxial zu diesem aufnehmbar ist und einen vorderen Abschnitt (33) aufweist, der am hinteren Abschnitt (31) drehbar gelagert ist.

11. Werkzeugsystem nach Anspruch 10, **dadurch gekennzeichnet, daß** der vordere Abschnitt (33) des Tiefenanschlages (30) lösbar, etwa durch eine Rast- oder eine Clipverbindung, mit dem hinteren Abschnitt verbunden ist.

12. Werkzeugsystem nach Anspruch 10 oder 11, **dadurch gekennzeichnet, daß** der Tiefenanschlag (30) mittels eines Rastmittels (35), das in eine entsprechende Rastausnehmung (37) des Aufnahmezylinders (12) der Werkzeugaufnahme (10,100,110,120) eingreift, lösbar mit diesem verbindbar ist.

13. Werkzeugsystem nach einem der Ansprüche 10 bis 12, **dadurch gekennzeichnet, daß** der Tiefenanschlag (30) mittels eines zwischen dem vorderen und dem hinteren Abschnitt (31,33) angeordneten Gewindeabschnitts längenverstellbar ausgebildet ist.

14. Werkzeugsystem nach einem der vorhergehenden Ansprüche, **dadurch gekennzeichnet, daß** als Werkzeug ein Kombinationswerkzeug (50,64,78,90) vorgesehen ist, bei dem an beiden Enden des Werkzeugschaftes sich koaxial von diesem forterstreckende Funktionsabschnitte angeordnet sind.

15. Werkzeugsystem nach Anspruch 14, **dadurch gekennzeichnet, daß** das Kombinationswerkzeug (50,64,78,90) entlang seiner Längsachse zwei jeweils aus einem Schaftabschnitt mit einem der Mehrkantausnehmung des Aufnahmezylinders angepaßten Mehrkantprofil und einem Funktionsabschnitt bestehende Teilwerkzeuge aufweist, welche Teilwerkzeuge mit ihren Schaftabschnitten miteinander verbunden sind.

16. Werkzeugsystem nach Anspruch 15, **dadurch gekennzeichnet, daß** die einander zugewandten Enden der Schaftabschnitte (51,52; 65,66; 91,92) Verbindungsabschnitte (55,56; 69,70) mit Hinterschneidungen zum formschlüssigen Eingreifen von Kupplungsmitteln (57,72) aufweisen.

17. Werkzeugsystem nach Anspruch 16, **dadurch gekennzeichnet, daß** als Kupplungsmittel ein Verbindungsteil (57,72) mit axial einander gegenüberliegenden Kupplungsausnehmungen zum formschlüssigen Eingreifen in die Hinterschneidungen vorgesehen ist.

18. Werkzeugsystem nach Anspruch 17, **dadurch gekennzeichnet, daß** die Schaftabschnitte (65,66) der Teilwerkzeuge zur axialen Kraftaufnahme stirnendig einander anliegen und daß als Verbindungsteil ein mit Rundwülsten zum Eingreifen in die Hinterschneidungen versehener Kupplungsring (72) aus einem festen,jedoch begrenzt elastischen Material, etwa Kunststoff, vorgesehen ist.

19. Werkzeugsystem nach Anspruch 17 oder 18, **dadurch gekennzeichnet, daß** die Hinterschneidungen der Verbindungsabschnitte nicht-radialsymmetrisch aufgebaut sind und mit einem entsprechend ausgebildeten Verbindungsteil (57,72) formschlüssig derart zusammenwirken, daß die Schaftabschnitte der Teilwerkzeuge verdrehfest miteinander verbunden und mit den Kanten ihrer Mehrkantprofile zueinander fluchtend festgelegt sind.

20. Werkzeugsystem nach Anspruch 19, **dadurch gekennzeichnet, daß** die Hinterschneidungen einen Querschnitt in Form eines Kreissegments aufweisen, und daß das Verbindungsmittel (57,72) mit entsprechenden kreisegmentförmig ausgebildeten Kupplungsausnehmungen ausgestattet ist.

21. Werkzeugsystem nach Anspruch 14 oder 15, **dadurch gekennzeichnet, daß** die einander zugewandten Enden der Schaftabschnitte (79,80) jeweils mit einer zentralen Bohrung (81) zur Aufnahme eines Verbindungsstiftes (82) versehen sind, und daß die Schaftabschnitte (79,80) der Teilwerkzeuge im Bereich der zentralen Bohrung (81) mit wenigstens einer radial den Schaftabschnitt durchdringenden Gewindebohrung zum Aufnehmen einer Halteschraube (83,84) versehen sind.

22. Werkzeugsystem nach einem der Ansprüche 14 bis 21, **dadurch gekennzeichnet, daß** der Funktionsabschnitt (53,67,85, 87,93,96) des Werkzeuges, oder wenigstens eines der Teilwerkzeuge, lösbar mit dem Schaft, beziehungsweise dem Schaftabschnitt des Teilwerkzeuges, verbunden ist.

23. Werkzeugsystem nach Anspruch 22, **dadurch gekennzeichnet, daß** der Funktionsabschnitt in einer Bohrung (60,75) des Schafts beziehungsweise des Schaftabschnittes (51,65) axial verschiebbar aufgenommen, jedoch mittels einer in eine radial die Wandung des Schafts beziehungsweise des Schaftabschnitts (51,65) durchbrechende Gewindebohrung eingeschraubten Arretierschraube (76) in einer vorbestimmten axialen Position fixierbar ist.

24. Werkzeugsystem nach einem der vorrhergehenden Ansprüche, **dadurch gekennzeichnet, daß** als Funktionsabschnitt ein Stufenbohrer (67) mit wenigstens zwei unterschiedlichen Bohrquerschnitten vorgesehen ist.

25. Werkzeugsystem nach einem der Ansprüche 23 oder 24, **dadurch gekennzeichnet, daß** der Schaft des Werkzeugs beziehungsweise der Schaftabschnitt (91) des Teilwerkzeugs eine zentrale Mehrkantausnehmung (94), vorzugsweise eine 1/4"-Sechskantausnehmung zur Aufnahme eines entsprechenden Funktionsbits, etwa eines Schraubendreherbits (96), aufweist.

26. Werkzeugsystem nach Anspruch 25, **dadurch gekennzeichnet, daß** das Funktionsbit (96) mit Befestigungsmitteln, etwa mittels eines Magneten (95), in der Mehrkantausnehmung (94) des Schaftes axialfest, aber lösbar aufnehmbar ist.

27. Werkzeugsystem nach einem der Ansprüche 14 bis 26, **dadurch gekennzeichnet, daß** ein Teilwerkzeug an seinem vom anderen Teilwerkzeug abgewandten Schaftteilende mit einem Senkabschnitt (61,86,94) und einem über diesen axial vorstehenden Bohrer (53,85,93) als Funktionsabschnitte verstehen ist.

28. Werkzeugsystem nach Anspruch 27, **dadurch gekennzeichnet, daß** der Senkabschnitt (86) für das Anfasen von Bohrlöchern zum nachfolgenden Einbringen einer Gewindebohrung ausgelegt und das andere Teilwerkzeug mit einem dem Bohrquerschnitt des Bohrers (85) angepaßten Gewindebohrer (87) versehen ist.

29. Werkzeugsystem nach einem der vorhergehenden Ansprüche, **dadurch gekennzeichnet, daß** im Aufnahmezylinder (12) der Werkzeugaufnahme (100,110), zwischen den für das Aufnehmen der Verrastungselemente (16) vorgesehenen Radialausnehmungen (44,59,73,74) und dem Zentrierbereich (14) der Mehrkantausnehmung (13),eine Torsionszone (101) und/oder eine Biegezone (102) vorgesehen ist.

30. Werkzeugsystem nach einer der vorhergehenden Ansprüche, **dadurch gekennzeichnet, daß** der Aufnahmezylinder (12) mittels einer Sicherheitskupplung, etwa einer Rutschkupplung (105), an einem mit der Drehmaschine verbundenen Abschnitt (103) der Werkzeugaufnahme (120) angeordnet ist.

## Claims

1. Tool system connected with the drive shaft of a rotary machine, for example a hand drilling machine or a screwdriving machine,
- with a tool receiver (10, 100, 110, 120) constructed in the form of a quick-action chuck, in coaxial arrangement relative to the drive shaft of the rotary machine and couplable or fixedly connected therewith,
- with a tool (40, 50, 64, 71, 90), which is received so as to be secure against rotation, but removable, in a polygonal recess (13), particularly a hexagonal recess, extending in a receiving cylinder (12) of the tool receiver (10, 100, 110, 120) from the end remote from the drive shaft of the rotary machine and which has a shank (41) axially supported at a centring region (14) in the polygonal recess (13) of the tool receiver (10, 100, 110, 120), which shank (41) has a polygonal profile matched to the polygonal recess of the receiving cylinder as well as at least one detent recess (44, 59, 73, 74) and from which shank at least one functional portion continues on coaxially,
- with a detenting of the tool receiver (10, 100, 110, 120) with the tool shank (41), which is settable by means of a locking sleeve (18) in engagement in a detent position, and out of engagement in an unlocking position, with the at least one detent recess (44) of the tool shank (41),
- wherein the tool has a functional portion on the end which in the installed position is remote from the drive shaft of the rotary machine and a centring portion (42), which is exclusively for the purpose of centring and co-operates with the centring region (14) of the tool receiver (10, 100, 110, 120), on the end which in the installed position faces the drive shaft of the rotary machine and
- wherein in the installed position the centring portion (42) and the centring region (15) are in direct contact,
- wherein the detenting (16) is formed from several identical detent elements (16), which are respectively received in radial recesses (15) - which are disposed at equal angular spacings from one another and which are axially spaced from the centring region (14) and penetrate the shell of the receiving cylinder (12) - and which are movable between a detent position, which protrudes into the polygonal recess (13), for the purpose of engagement in the at least one detent recess (44) of the tool shank (41) and an unlocking setting for release of the tool shank (44), at which locking elements (16) a tool is supported in the radial respect, and
- with the locking sleeve (18), which is received on the receiving cylinder (12) and by means of which the detent elements (16) are on the one hand lockable in the detent position and on the other hand releasable for radial deflection into the unlocking position.

2. Tool system according to claim 1, **characterised in that** the centring region of the tool receiver (10, 100, 110, 120) is a conical support shoulder (14) arranged at the end, which leads to the drive shaft, of the polygonal recess (13) of the receiving cylinder (12) coaxially to this and that the shank of the tool has at its end remote from the functional portion a centring cone (42) corresponding with the conical support shoulder (14).

3. Tool system according to claim 1, **characterised in that** the locking sleeve (18) is constructed as an axially movable slide sleeve movable on the receiving cylinder (12) and consists of a locking portion (19), which serves for locking the detent elements (16) in their detent position, and a holding portion (20) which is connected therewith and which comprises means for positioning the locking sleeve (18) in the locking setting and unlocking setting.

4. Tool system according to claim 3, **characterised in that** locking balls are provided as locking elements and the locking portion (19) of the locking sleeve (18) has a support surface (26) which is matched to the contour of the locking balls (16) and at which the detent balls are supported in terms of area in the detent position.

5. Tool system according to claim 3 or 4, **characterised in that** the holding portion (20) of the locking sleeve (18) has a detent element (46) as means for the locking positioning thereof in the locking setting and unlocking setting and that at least one receiving device (48, 49), in which the detent element (46) releasably engages for positioning the locking sleeve (18), is arranged in the cylinder shell of the receiving cylinder (12).

6. Tool system according to claim 5, **characterised in that** the cylinder shell of the receiving cylinder (12) is provided with two receiving devices (48, 49) for selectable positioning of the locking sleeve (18), which devices are arranged at an axial spacing from one another in such a manner that on co-operation of the detent element (46) with one receiving device (48) the detent elements are locked in their detent position and on co-operation of the detent element (46) with the other receiving device (49) the detent elements are released for radial deflection into their unlocking position.

7. Tool system according to one of claims 3 to 6, **characterised in that** the locking portion (19) and the holding portion (20) of the locking sleeve (18) are connected together in force-locking manner, for example by a clip connection.

8. Tool system according to one of claims 3 to 7, **characterised in that** at least the locking portion (19) of the locking sleeve (18) consists of a material of high hardness, for example steel.

9. Tool system according to one of the preceding claims, **characterised in that** the tool receiver (10, 100, 110, 120) is detachably connected with the drive shaft of the rotary machine, for example by means of a clamping pin (11) received in a clamping chuck arranged at the drive shaft.

10. Tool system according to one of the preceding claims, **characterised by** a bit stop (30), which is detachably placeable on the tool receiver (10, 100, 110, 120) and which is receivable by a rearward portion (31) on the receiving cylinder (12) of the tool receiver (10, 100, 110, 120) coaxially thereto and has a forward portion (33) rotatably mounted at the rearward portion (31).

11. Tool system according to claim 10, **characterised in that** the forward portion (33) of the bit stop (30) is detachably connected with the rearward portion, for example by a detent connection or a clip connection.

12. Tool system according to claim 10 or 11, **characterised in that** the bit stop (30) is detachably connectible by means of a detent means (35), which engages in a corresponding detent recess (37) of the receiving cylinder (12) of the tool receiver (10, 100, 110, 120), with the cylinder.

13. Tool system according to one of claims 10 to 12, **characterised in that** the bit stop (30) is constructed to be longitudinally adjustable by means of a threaded portion arranged between the forward and the rearward portion (31, 33).

14. Tool system according to one of the preceding claims, **characterised in that** a combination tool (50, 64, 78, 90) is provided as the tool, at which functional portions are arranged at both ends of the tool shank to continue on coaxially therefrom.

15. Tool system according to claim 14, **characterised in that** the combination tool (50, 64, 78, 90) has, along the longitudinal axis thereof, two part tools respectively consisting of a shank portion with a polygonal profile matched to the polygonal recess of the receiving cylinder and a functional portion, which part tools are connected together by their shank portions.

16. Tool system according to claim 15, **characterised in that** the mutually facing ends of the shank portions (51, 52; 65, 66; 91, 92) have connecting portions (55, 56; 69, 70) with undercuts for mechanically positive engagement of coupling means (57, 72).

17. Tool system according to claim 16, **characterised in that** a connecting part (57, 72) with mutually axially opposite coupling recesses for mechanically positive engagement in the undercuts is provided as coupling means.

18. Tool system according to claim 17, **characterised in that** the shank portions (65, 66) of the part tools bear against one another at the ends for axial acceptance of force and that a coupling ring (72), which is provided with round beads for engagement in the undercuts, of a material which is solid, but resilient to a limited extent, for example plastics material, is provided as connecting part.

19. Tool system according to claim 17 or 18, **characterised in that** the undercuts of the connecting portions are formed to be non-radially-symmetrical and co-operate in mechanically positive manner with a correspondingly formed connecting part (57, 72) in such a manner that the shank portions of the part tools are connected together to be secure against relative rotation and are fixed in mutual alignment by the edges of their polygonal profiles.

20. Tool system according to claim 19, **characterised in that** the undercuts have a cross-section in the form of a circular segment and that the connecting means (57, 72) is equipped with corresponding coupling recesses formed to be of circular segmental shape.

21. Tool system according to claim 14 or 15, **characterised in that** the mutually facing ends of the shank portions (79, 80) are each provided with a respective central bore (81) for reception of a connecting pin (82) and that the shank portions (79, 80) of the part tools are provided in the region of the central bore (81) with at least one threaded bore, which radially penetrates the shank portion, for reception of a retaining screw (83, 84).

22. Tool system according to one of claims 14 to 21, **characterised in that** the functional portion (53, 67, 85, 87, 93, 96) of the tool or of at least one of the part tools is detachably connected with the shank or with the shank portion of the part tool.

23. Tool system according to claim 22, **characterised in that** the functional portion is received in a bore (60, 75) of the shank or of the shank portion (51, 65) to be axially displaceable, but is fixable in a predetermined axial position by means of a locking screw (76) threadable into a threaded bore radially penetrating the wall of the shank or of the shank portion (51, 65).

24. Tool system according to one of the preceding claims, **characterised in that** a stepped drill bit (67) with at least two different bit cross-sections is provided as functional portion.

25. Tool system according to one of claims 23 and 24, **characterised in that** the shank of the tool or the shank portion (91) of the part tool has a central polygonal recess (94), preferably a 1/4" hexagonal recess, for reception of a corresponding functional bit, for example a screwdriver bit (96).

26. Tool system according to claim 25, **characterised in that** the functional bit (96) is receivable in axially fixed, but releasable, manner by fastening means, for example by means of a magnet (95), in the polygonal recess (94) of the shank.

27. Tool system according to one of claims 14 to 26, **characterised in that** one part tool is provided at its shank part end remote from the other part tool with a countersinking portion (61, 86, 94) and a drill bit (53, 85, 93), which projects axially beyond this, as functional portions.

28. Tool system according to claim 27, **characterised in that** the countersinking portion (86) is designed for the chamfering of drilled holes for subsequent introduction of a threaded bore and the other part tool is provided with a threaded drill bit (87) matched to the bore cross-section of the drill bit (85).

29. Tool system according to one of the preceding claims, **characterised in that** a torsion zone (101) and/or a bending zone (102) is or are provided in the receiving cylinder (12) of the tool receiver (100, 110) between the radial recesses (44, 59, 73, 74), which are provided for reception of the detent elements (16), and the centring region (14) of the polygonal recess (13).

30. Tool system according to one of the preceding claims, **characterised in that** the receiving cylinder (12) is arranged at a portion (103), which is connected with the rotary machine, of the tool receiver (120) by means of a safety coupling, for example a slipping clutch (105).

## Revendications

1. Système d'outil relié à l'arbre d'entraînement d'un tour, par exemple d'une perceuse à main ou d'une machine tournevis,
- avec un logement d'outil (10, 100, 110, 120) réalisé à la manière d'un mandrin à serrage rapide, relié par un agencement coaxial à l'arbre d'entraînement du tour solidement ou par un accouplement à celui-ci,
- avec un outil (40, 50, 64, 71, 90) reçu c'une manière non tournante mais retirable dans un évidement polygonal (13), notamment un évidement hexagonal qui s'étend depuis le côté frontal éloigné de l'arbre d'entraînement du tour dans un cylindre de réception (12) du logement d'outil (10, 100, 110, 120), qui possède une tiqe (41) s'appuyant axialement dans une zone de centrage (14) dans l'évidement polygonal (13) du logement d'outil (10, 100, 110, 120), ladite tige (41) présentant un profil polygonal adapté à l'évidement polygonal du cylindre de réception ainsi qu'au moins un évidement d'enclenchement (44, 59, 73, 74), et à partir de ladite tige s'étendant coaxialement au moins un tronçon fonctionnel,
- avec un enclenchement du logement d'outil (10, 100, 110, 120) avec la tige d'outil (41) qui peut être mise en prise au moyen d'un manchon de verrouillage (18) avec au moins un évidement d'enclenchement (44) de la tige d'outil (41) dans une position d'enclenchement et qui peut être sortie de prise dans une position de déverrouillage,
- où l'outil présente au côté frontal eloigné dans la position de montage de l'arbre d'entraînement du tour un tronçon fonctionnel et sur le côté frontal orienté en position de montage vers l'arbre d'entraînement du tour un tronçon de centrage (42) exclusivement dans le but du centrage, qui coopère avec la zone de centrage (14) du logement d'outil (10, 100, 110, 120) et
- où en position de montage, le tronçon de centrage (42) et la zone de centrage (14) sont en application directe,
- où l'enclenchement (16) est constitié de plusieurs éléments d'enclenchement identiques (16) qui sont reçus respectivement à des distances angulaires égales les uns des autres, en étant espacés axialement de la zone de centrage (14), dans des évidements radiaux (15) traversant dans l'enveloppe du cylindre de réception (12) et sont déplaçables entre une position d'enclenchement, en saillie dans l'évidement polygonal (13), en vue d'une mise en prise avec au moins un évidement d'enclenchement (44) de la tige d'outil (41), et une position de déverrouillage pour libérer la tige d'outil (44), l'outil s'appuyant radialement sur lesdits éléments de verrouillage (16) et
- avec le manchon de verrouillage (18) reçu sur le cylindre de réception (12) au moyen duquel les éléments d'enclenchement (16) peuvent être arrêtés, d'une part, dans la position d'enclenchement et peuvent être libérés, d'autre part, pour l'écartement radial dans la position de déverrouillage.

2. Système d'outil selon la revendication 1, **caractérisé en ce que** dans le cas de la zone de centrage du logement d'outil (10, 100, 110, 120) il s'agit d'un épaulement d'appui conique (14) qui est disposé à l'extrémité orientée vers l'arbre d'entraînement de l'évidement polygonal (13) du cylindre de réception (12) coaxialement à celui-ci, et **en ce que** la tige de l'outil présente à son extrémité éloignée du tronçon fonctionnel un cône de centrage (42) correspondant à l'épaulement d'appui conique (14).

3. Système d'outil selon la revendication 1, **caractérisé en ce que** le manchon de verrouillage (18) est réalisé sous forme de manchon coulissant déplaçable axialement sur le cylindre de réception (12) et esL constitué d'un tronçon de verrouillage (19) servant à verrouiller les éléments d'enclenchement (16) dans leur position d'enclenchement et d'un tronçon de retenue (20) relié à celui-ci, le tronçon de retenue (20) présentant des moyens de positionnement du manchon de verrouillage (18) dans les positions de verrouillage et de déverrouillage.

4. Système d'outil selon la revendication 3, **caractérisé en ce que** comme éléments de verrouillage, des billes de verrouillage sont prévues, et **en ce que** le tronçon de verrouillage (19) du manchon de verrouillage (18) possède une face d'appui (26) adaptée au contour des billes de verrouillage (16) sur laquelle s'appuient avec toute leur surface les billes de verrouillage en position de verrouillage.

5. Système d'outil selon la revendication 3 ou 4,
**caractérisé en ce que** le tronçon de retenue (20) du manchon de verrouillage (18), comme moyen pour le positionnement arrêtant celui-ci dans la position de verrouillage et de déverrouillage, présente un élément d'enclenchement (46) et **en ce qu'**il est disposé dans l'enveloppe cylindrique du cylindrique de réception (12) au moins un dispositif de réception (48, 49) dans lequel s'engage amoviblement l'élément d'enclenchement (46) pour le positionnement du manchon de verrouillage (18).

6. Système d'outil selon la revendication 5, **caractérisé en ce que** l'enveloppe cylindrique du cylindre de réception (12) est pourvue de deux dispositifs de réception (48, 49) pour le positionnement sélectif du manchon de verrouillage (18), qui sont disposés à une telle distance axiale l'un de l'autre que lors de la coopération de l'élément d'enclenchement (46) avec un dispositif de réception (48), les éléments d'enclenchement sont arrêtés dans leur position d'enclenchement et, lors de la coopération de l'élément d'enclenchement (46) avec l'autre dispositif de réception (49), les éléments d'enclenchement sont libérés pour s'écarter radialement dans leur position de déverrouillage.

7. Système d'outil selon l'une des revencications 3 à 6, **caractérisé en ce que** le tronçon de verrouillage (19) et le tronçon de retenue (20) du manchon de verrouillage (10) sont reliés entre eux par force, par exemple par un assemblage à clips.

8. Système d'outil selon l'une des revencications 3 à 7, **caractérisé en ce qu'**au moins le tronçon de verrouillage (19) du manchon de verrouillage (18) est réalisé en un matériau d'une grande dureté, par exemple en acier.

9. système d'outil selon l'une des revendications précédentes, **caractérisé en ce que** le logement d'outil (10, 100, 110, 120) est relié amoviblement, par exemple au moyen d'un tenon de serrage (11) reçu dans un mandrin de serrage disposé à l'arbre d'entraînement, à l'arbre d'entraînement du tour.

10. Système d'outil selon l'une des revendications précédentes, **caractérisé par** une butée de profondeur (30) pouvant être placée amoviblement sur le logement d'outil (10, 100, 110, 120) qui peut être reçue avec un tronçon arrière (31) sur le cylindre de réception (12) du logement d'outil (10, 100, 110, 120) coaxialement à celui-ci et qui présente un tronçon avant (33) qui est logé d'une manière tournante au tronçon arrière (31).

11. Système d'outil selon la revendication 10, **caractérisé en ce que** le tronçon avant (33) de la butée de profondeur (30) est relié amoviblement, par exemple par un assemblage à enclenchement ou à clips, au tronçon arrière.

12. Système d'outil selon la revendication 10 ou 11, **caractérisé en ce que** la butée de profondeur (30) peut être reliée par un moyen d'enclenchement (35) qui s'engage dans un évidement d'enclenchement correspondant (37) du cylindre de réception (12) du logement d'outil (10, 100, 110, 120), d'une manière amovible à celui-ci.

13. Système d'outil selon l'une des revendications 10 à 12, **caractérisé en ce que** la butée de profondeur (30) est réalisée d'une manière déplaçable longitudinalement au moyen d'un troncon fileté disposé entre les troncons avant et arrière (31, 33).

14. Système d'outil selon l'une des revendications précédentes, **caractérisé en ce que**, comme outil, un outil combiné (50, 64, 78, 90) est prévu, où sont disposés aux deux extrémités de la tige d'outil des tronçons fonctionnels coaxialement au loin de celle-si.

15. Système d'outil selon la revendication 14, **caractérisé en ce que** l'outil de combinaison (50, 64, 78, 90) présente le long de son axe longitudinal deux outils partiels constitués respectivement d'un tronçon de tige avec un profil polygonal adapté à l'évidement polygonal du cylindre de réception ainsi que d'un tronçon fonctionnel, lesdits outils partiels étant reliés l'un à l'autre par leurs tronçons de tige.

16. Système d'outil selon la revendication 15, **caractérisé en ce que** les extrémités orientées les unes vers les autres des tronçons de tige (51, 52 ; 65, 66 ; 91, 92) présentent des tronçons de liaison (55, 56 ; 69, 70) avec des contre-dépouilles pour la mise en prise par concordance des formes de moyens d'accouplement (57, 72).

17. Système d'outil selon la revendication 16, **caractérisé en ce qu'**il est prévu comme moyen d'accouplement une pièce de liaison (57, 72) avec des évidements d'accouplement opposés axialement l'un à l'autre pour la mise en prise par concordance des formes dans les contre-dépouilles.

18. système d'outil selon la revendication 17, **caractérisé en ce que** les tronçons de tige (65, 66) des outils partiels s'appliquent en vue de la réception de force axiale par leurs extrémités frontales l'un à l'autre, et **en ce qu'**il est prévu comme pièce de liaison une bague d'accouplement (72) pourvue de bourrelets ronds pour l'engagement dans les contre-dépouilles, en un matériau solide, cependant à élasticité limitée, par exemple en matière synthétique.

19. Système d'outil selon la revendication 17 ou 18, **caractérisé en ce que** les contre-dépouilles des tronçons de liaison ne sont pas réalisées avec une symétrie radiale et coopèrent avec une pièce de liaison (57, 72) réalisée d'une manière correspondante par concordance des formes de telle sorte que les tronçons de tige des outils partiels sont reliés entre eux d'une manière non tournante et sont fixes avec les arêtes de leurs profils polygonaux d'une manière alignée l'un avec l'autre.

20. Système d'outil selon la revendication 19, **caractérisé en ce que** les contre-dépouilles ont une section transversale en forme de segment de cercle, et **en ce que** le moyen de liaison (57, 72) est équipé d'évidements d'accouplement réalisés d'une manière correspondante en forme de segment de cercle.

21. Système d'outil selon la revendication 14 ou 15, **caractérisé en ce que** les extrémités orientées l'une vers l'autre des tronçons de tige (79, 80) présentent chacune un perçage central (81) pour la réception d'un axe de liaison (82) et **en ce que** les tronçons de tige (79, 80) des outils partiels présentent au voisinage du perçage central (81) au moins un perçage fileté traversant radialenent le tronçon de tige pour la réception d'une vis de retenue (83, 84).

22. Système d'outil selon l'une des revendications 14 à 21, **caractérisé en ce que** le tronçon fonctionnel (53, 67, 85, 87, 93, 96) de l'outil ou d'au moins l'un des outils partiels, est relié amoviblement à la tige, respectivement au tronçon de tige de l'outil partiel.

23. Système d'outil selon la revendication 22, **caractérisé en ce que** le tronçon fonctionnel est reçu d'une manière déplaçable axialement dans un perçage (60, 75) de la tige respectivement du tronçon de tige (51, 65), mais qu'il peut être fixé au moyen d'une vis d'arrêt (76) vissée dans un percage fileté traversant radialement la paroi de la tige respectivement du tronçon de tige (51, 65), dans une position axiale prédéterminée.

24. Système d'outil selon l'une des revendications prédédentes, **caractérisé en ce qu'**il est prévu comme tronçon fonctionnel un foret étagé (67) avec au moins deux sections transversales de foret différentes.

25. Système d'outil selon l'une des revendications 23 ou 24, **caractérisé en ce que** la tige de l'outil respectivement le tronçon de tige (91) de l'outil partiel présente un évidement polygonal central (94), de préférence un évidement hexagonal 1/4" pour la réception d'une lame fonctionnelle correspondante, par exemple d'une lame de tournevis (96).

26. Système d'outil selon la revendication 25, **caractérisé en ce que** la lame fonctionnelle (96) peut être reçue d'une manière axialement fixe mais amovible avec des moyens de fixation, par exemple avec un aimant (95) dans l'évidement polygonal (94) de la tige.

27. Système d'outil selon l'une des revendications 14 à 26, **caractérisé en ce qu'**un outil partiel, à son extrémité de partie de tige éloignée de l'autre outil partiel, est pourvu d'un tronçon chanfreiné (61, 86, 94) et d'un foret (53, 85, 93) faisant saillie axialement sur celui-ci, comme tronçons fonctionnels.

28. Système d'outil selon la revendication 27, **caractérisé en ce que** le tronçon chanfreiné (86) est conçu pour biseauter des trous forés pour l'application suivante d'un perçage fileté, et **en ce que** l'autre outil partiel présente un taraud (87) adapté à la section transversale de forage du foret (85).

29. Système d'outil selon l'une des revendications précédentes, **caractérisé en ce qu'**il est prévu dans le cylindre de réception (12) du logement d'outil (100, 110), entre les évidements radiaux (44, 59, 73, 74) prévus pour la réception des éléments d'enclenchement (16) et la zone de centrage (14) de l'évidement polygonal (13) une zone de torsion (101) et/ou une zone de flexion (102).

30. Système d'outil selon l'une des revendications précédentes, **caractérisé en ce que** le cylindre de réception (12) est disposé au moyen d'un accouplement de sécurité, par exemple un accouplement à glissement (105) à un tronçon (103) du logement d'outil (120) relié au tour.
